(19) Europäisches Patentamt
European Patent Office
Office européen des brevets

(11) **EP 2 875 627 B1**

(12) **EUROPÄISCHE PATENTSCHRIFT**

(45) Veröffentlichungstag und Bekanntmachung des Hinweises auf die Patenterteilung:
**30.03.2016   Patentblatt 2016/13**

(21) Anmeldenummer: **14727406.2**

(22) Anmeldetag: **26.05.2014**

(51) Int Cl.:
*H04M 3/42* *(2006.01)*

(86) Internationale Anmeldenummer:
**PCT/EP2014/001415**

(87) Internationale Veröffentlichungsnummer:
**WO 2014/187573 (27.11.2014 Gazette 2014/48)**

(54) **VERFAHREN UND ANORDNUNG ZUM AUFBAU VON TELEKOMMUNIKATIONSVERBINDUNGEN**

METHOD AND SYSTEM FOR ESTABLISHING TELECOMMUNICATIONS LINKS

PROCÉDÉ ET DISPOSITIF POUR ÉTABLIR DES LIAISONS DE TÉLÉCOMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2013   DE 102013008933**

(43) Veröffentlichungstag der Anmeldung:
**27.05.2015   Patentblatt 2015/22**

(73) Patentinhaber: **Unify GmbH & Co. KG**
**81379 Munich (DE)**

(72) Erfinder:
• **RIST, Claus**
**44795 Bochum (DE)**
• **GLASER, Martin**
**59192 Bergkamen (DE)**
• **VOLKMANN, Michael**
**58313 Herdecke (DE)**

(74) Vertreter: **Fritzsche, Thomas**
**Fritzsche Patent**
**Naupliastraße 110**
**81545 München (DE)**

(56) Entgegenhaltungen:
**DE-A1-102006 001 226     US-B1- 6 647 109**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Verfahren zum Aufbau einer von einem Steuerprogramm gesteuerten Telekommunikationsverbindung mit einem zweiten Kommunikationsendgerät, wobei ein erstes Kommunikationsendgerät in einer einem CTI-Server zugeordneten CTI-Domäne von dem CTI-Server mit einem CTI-Service versorgt wird. Die Erfindung betrifft außerdem eine Anordnung zum Aufbau einer von einem Steuerprogramm gesteuerten Telekommunikationsverbindung, umfassend wenigstens einen CTI-Server und wenigstens ein erstes Kommunikationsendgerät, welches sich in der CTI-Domäne des wenigstens einen CTI-Servers befindet.

Die Integration von Telekommunikationsnetzen und Datennetzen gewinnt zunehmend an Bedeutung. Telekommunikationsnetze dienen hauptsächlich der Kommunikation von Telekommunikationsteilnehmern mit Hilfe von Telekommunikationsendgeräten wie beispielsweise Telefonen. Datennetze dienen hauptsächlich der Vernetzung von Computern, beispielsweise von PCs mit sogenannten Servern. Verfahren und Anordnungen, bei denen auf Computern installierte Anwendungen Kommunikationsanlagen und Kommunikationsverbindungen steuern und überwachen, sind allgemein als CTI-Lösungen (CTI = Computer Telephony Integration) bekannt. Dabei können einerseits Anschlüsse von Kommunikationsanlagen und andererseits Verbindungen zwischen den Anschlüssen gesteuert und überwacht werden. Bei den Verbindungen handelt es sich jeweils um temporäre Kommunikationskanäle zwischen zwei oder mehreren Teilnehmern einer Kommunikationsanlage oder mehrerer Kommunikationsanlagen.

Beim Betrieb einer CTI-Lösung werden jeweils Daten mit Steuer- und Zustandsinformationen zwischen einer Kommunikationsanlage und einer CTI-Anwendung (CTI-Anwendungsprogramm) übertragen. Dazu verfügen die Kommunikationsanlagen über spezielle Schnittstellen zum Austausch der Daten, die CTI-Schnittstellen. Ebenso verfügen die Anwendungen bzw. die PCs über eine entsprechende CTI-Schnittstelle für diesen Datenaustausch. Hierzu sind die CTI-Schnittstellen der Kommunikationsanlage und die der Anwendung über eine Datenleitung oder über ein Datennetz miteinander verbunden. Da die maximale Anzahl von CTI-Schnittstellen an einer Kommunikationsanlage beschränkt ist, wird zwischen die Kommunikationsanlage und die Anwendungen häufig ein Telefonie-Server geschaltet.

Die Druckschrift WO 98/51092 A1 "Computer telephony integration gateway" zeigt ein öffentliches Kommunikationsnetzwerk mit mehreren Kommunikationsanlagen und ein privates Kommunikationsnetzwerk mit mehreren Domänen, die jeweils Rechner mit Anwendungen zur Steuerung und/oder Überwachung von Ressourcen des öffentlichen Kommunikationsnetzwerks aufweisen. Die gezeigte Anordnung weist als Umwertungseinrichtung einen "CTI-Gateway" auf, welcher die zur Steuerung und/oder Überwachung der Ressourcen vom öffentlichen Kommunikationsnetzwerk zum privaten Kommunikationsnetzwerk versendeten Daten derart verändert, dass sich diese Daten als die Daten einer einzigen öffentlichen Kommunikationsanlage darstellen, und umgekehrt die Daten, die vom privaten Kommunikationsnetzwerk mit den Anwendungen zum öffentlichen Kommunikationsnetzwerk versendet werden, derart verändert, als ob sie aus einem privaten Kommunikationsnetzwerk mit nur einer Anwendung gesendet worden wären.

Die DE 101 59 636 B4 beschreibt ein Verfahren zur Steuerung und/oder Überwachung von Ressourcen und Verbindungen mittels Austausch von Daten zwischen Kommunikationsanlagen und mindestens einer Anwendung, wobei die Daten jeweils ein die Ressourcen und Verbindungen unterscheidendes Kennzeichen aufweisen, wobei die Kennzeichen der Ressourcen beim Austausch jeweils derart umgewertet werden, dass sie sich für die eine oder jede Anwendung als Kennzeichen einer einzigen Kommunikationsanlage mit Teilnehmeranschlüssen darstellen, dadurch gekennzeichnet, dass die Kennzeichen der Verbindung zwischen Ressourcen von verschiedenen Kommunikationsanlagen jeweils eine lokale Verbindungsnummer (Call-ID) der an der Verbindung beteiligten Kommunikationsanlagen und eine globale Verbindungsnummer (Call-ID) umfassen, und dass durch die Umwertung die globale Verbindungsnummer (Call-ID) so zur Anwendung übertragen wird, dass diese von der Anwendung nicht von einer lokalen Verbindungsnummer (Call-ID) unterscheidbar ist.

Bisher werden CTI-Services von einem CTI-Server nur dann akzeptiert (ausgeführt), wenn sich das zugehörige Device innerhalb der CTI-Domäne befindet. Ein Beispiel für diese technische Lehre ist in der DE 10 2006 001 226 A1 beschrieben, die die Merkmale des Oberbegriffs des Anspruchs 1 zeigt. Das bedeutet, dass Devices außerhalb der CTI-Domäne durch eine Applikation nur über ihren Proxy (Trunk Device) angesprochen werden können.

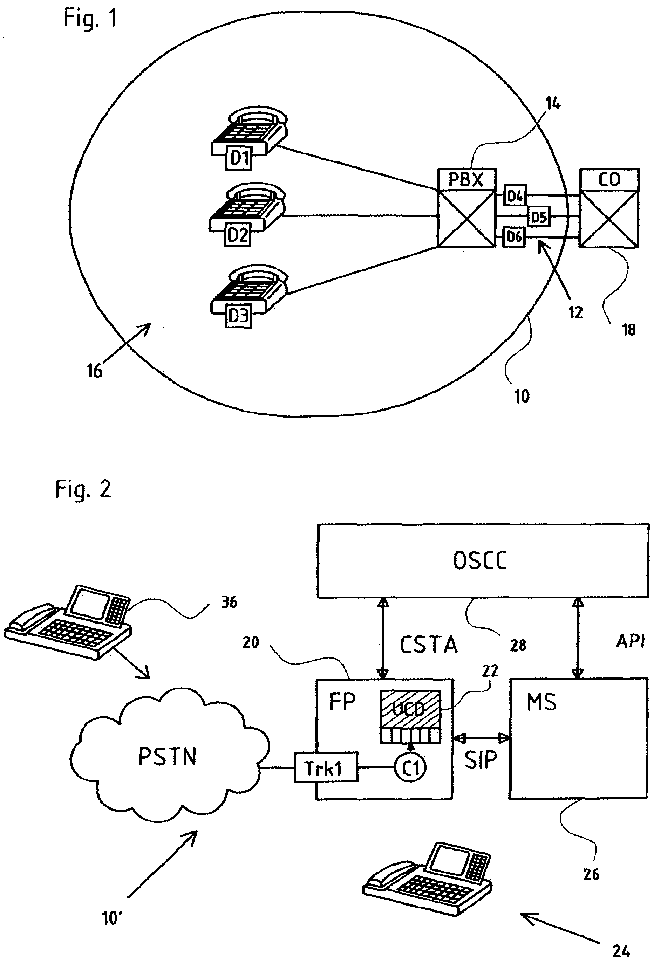

In Fig. 1 ist in schematischer Weise eine herkömmliche Anordnung einschließlich einer CTI-Domäne (Switching SUB Domain 10) gezeigt. Dieses Diagramm ist dem ECMA 269 entnommen (das Standard-CSTA-Modell). Eine Switching Domain, eine Switching Sub Domain oder eine CTI-Domäne ist der Bereich, den typischerweise eine Applikation über CSTA steuert.

In der Mitte in Fig. 1 ist der Branch 14, z.B. die OpenScape Office, gezeigt. Dort sind Endgeräte D1, D2, D3, die Telefone, angeschaltet oder Trunks, die zum Central Office (CO) 18 führen, sowie D4, D5, D6, die Network Interface Devices. Im vorliegenden Fall sind Trunks D4, D5, D6 als Network Interface Devices 12 gezeigt. Bei den Devices ist es nicht von Bedeutung, ob es sich um analoge Endgeräte oder ISDN-Geräte handelt. Das gleiche trifft auf die Trunks zu, es können analoge Trunks, ISDN-Trunks oder SIP-Trunks sein. Verbunden mit PBX 14 sind innerhalb der Domain 10 andere Devices D1, D2, D3, welche zusammengefasst mit Bezugsziffer 16 dargestellt sind. Die (CTI-)Applikation kann normalerweise an alle Geräte, die an dieser Anlage angeschaltet sind, Befehle absetzen.

Diese nach dem Stand der Technik bekannte Anordnung erfolgt durch das Absetzen des CTI-Service auf den zugehörigen Proxy (Trunk Device). Das bedeutet, typische CTI-Applikationen verwenden zur Steuerung ausschließlich Devices, die sich innerhalb der CTI-Domäne (Switching SUB Domain 10) befinden, und umgehen somit das Problem, ein Device direkt zu steuern, auch wenn es sich nicht in der CTI-Domäne befindet. Diese Problematik soll mit der vorliegenden Erfindung gelöst werden.

Eine Aufgabe der vorliegenden Erfindung besteht darin, Lösungen für das vorstehend genannte Problem anzugeben, um ein Kommunikationsendgerät steuern zu können, auch wenn es sich nicht in der CTI-Domäne befindet. Diese Aufgabe wird durch ein Verfahren bzw. eine Anordnung nach einem der unabhängigen Patentansprüche gelöst. Vorteilhafte Weiterbildungen der Erfindung sind Gegenstand von Unteransprüchen.

Erfindungsgemäß ist ein Verfahren zum Aufbau einer von einem Steuerprogramm gesteuerten Telekommunikationsverbindung mit einem zweiten Kommunikationsendgerät vorgesehen, wobei ein erstes Kommunikationsendgerät in einer mindestens einem CTI-Server zugeordneten CTI-Domäne von dem CTI-Server mit einem CTI-Service versorgt wird, wobei das zweite Kommunikationsendgerät außerhalb der CTI-Domäne angeordnet und über einen innerhalb der CTI-Domäne befindlichen Proxy an den CTI-Server angebunden ist, das Steuerprogramm über eine Zwischenfunktionseinheit mit dem CTI-Server verbunden ist, die Zwischenfunktionseinheit dem Steuerprogramm das zweite Kommunikationsendgerät als in der aufgebauten Telekommunikationsverbindung angebundenes Kommunikationsendgerät anstelle des Proxy signalisiert, und die Zwischenfunktionseinheit den CTI-Server anweist, den CTI-Service nach Maßgabe des Steuerprogramms an dem Proxy auszuführen.

Nachfolgend wird häufig eine Gesprächsverbindung als ein mögliches Beispiel für eine Telekommunikationsverbindung verwendet, ohne dass dies als beschränkend angesehen werden sollte.

Gemäß einer vorteilhaften Ausführungsform der Erfindung, deren Merkmale auch mit Merkmalen anderer Ausführungsformen dieser Erfindung kombiniert werden können, ist es vorgesehen, dass, falls das zweite Kommunikationsendgerät nicht an das erste Kommunikationsendgerät angebunden ist, die Zwischenfunktionseinheit dem Steuerprogramm ein virtuelles drittes Kommunikationsendgerät innerhalb der CTI-Domäne als in der aufgebauten Telekommunikationsverbindung angebundenes Kommunikationsendgerät anstelle des Proxy signalisiert.

Gemäß einer vorteilhaften Ausführungsform der Erfindung, deren Merkmale auch mit Merkmalen anderer Ausführungsformen dieser Erfindung kombiniert werden können, ist es vorgesehen, dass die erste Gesprächsverbindung zwischen dem ersten Kommunikationsendgerät und dem zweiten Kommunikationsendgerät erstellt wird, wobei die erste Gesprächsverbindung dem Steuerprogramm als erster CTI-Service signalisiert wird.

Gemäß einer vorteilhaften Ausführungsform der Erfindung, deren Merkmale auch mit Merkmalen anderer Ausführungsformen dieser Erfindung kombiniert werden können, ist es vorgesehen, dass das Verfahren weiterhin umfasst, eine zweite Gesprächsverbindung anstelle der ersten Gesprächsverbindung festzulegen, wobei die zweite Gesprächsverbindung zwischen dem ersten Kommunikationsendgerät und einem dritten Kommunikationsendgerät angeordnet ist.

Gemäß einer vorteilhaften Ausführungsform der Erfindung, deren Merkmale auch mit Merkmalen anderer Ausführungsformen dieser Erfindung kombiniert werden können, ist es vorgesehen, dass die zweite Gesprächsverbindung einem zweiten CTI-Service entspricht, wobei der in dem Steuerprogramm erscheinende CTI-Service der erste CTI-Service ist.

Gemäß einer vorteilhaften Ausführungsform der Erfindung, deren Merkmale auch mit Merkmalen anderer Ausführungsformen dieser Erfindung kombiniert werden können, ist es vorgesehen, dass die erste und/oder zweite Gesprächsverbindung je einem Proxy entsprechen, und der zumindest eine CTI-Server dafür eingerichtet ist, ohne eine Kenntnis des jeweiligen dynamisch änderbaren Proxy zu nutzen, den CTI-Service automatisch mit dem jeweils gültigen Proxy auszuführen.

Gemäß einer vorteilhaften Ausführungsform der Erfindung, deren Merkmale auch mit Merkmalen anderer Ausführungsformen dieser Erfindung kombiniert werden können, ist es vorgesehen, dass die Zwischenfunktionseinheit ausgestaltet ist, Abstraktionsdaten bezüglich des zumindest einen CTI-Servers über ein Proxy zum Steuerprogramm zu übermitteln.

Gemäß einer vorteilhaften Ausführungsform der Erfindung, deren Merkmale auch mit Merkmalen anderer Ausführungsformen dieser Erfindung kombiniert werden können, ist es vorgesehen, dass der wenigstens eine CTI-Server eine CTI-Domäne definiert und sich wenigstens eines der Kommunikationsendgeräte außerhalb der CTI-Domain befindet.

Gemäß einer vorteilhaften Ausführungsform der Erfindung, deren Merkmale auch mit Merkmalen anderer Ausführungsformen dieser Erfindung kombiniert werden können, ist es vorgesehen, dass der Wechsel von der ersten zur zweiten Gesprächsverbindung entweder (i) einem Single Step Transfer oder (ii) einem Wechsel von CallMonitoring zur Kommunikationsendgeräteverbindung entspricht.

Erfindungsgemäß ist ferner ein Computerprogrammprodukt bzw. Computerprogramm für den Aufbau einer Telekommunikationsverbindung zum Durchführen eines Verfahrens gemäß einem der Ansprüche 1-7 vorgesehen.

Erfindungsgemäß ist ferner ein maschinenlesbarer Datenträger mit einem auf dem Datenträger gespeicherten Computerprogrammprodukt gemäß Anspruch 8 vorgesehen.

Erfindungsgemäß ist ferner eine Anordnung zum Aufbau einer von einem Steuerprogramm gesteuerten Telekommunikationsverbindung vorgesehen, umfassend einen CTI-Server, ein erstes Kommunikationsendgerät, welches sich in der CTI-Domäne des CTI-Servers befindet, ein zweites Kommunikationsendgerät, welches sich außerhalb der CTI-Domäne des CTI-Servers befindet, und eine Steuereinrichtung zum Ausführen des Verfahrens gemäß einem der Ansprüche 1 bis 7.

Die Erfindung löst das Problem, indem der CTI-Server für die CTI-Services eine Abstraktionsebene "Extra Domain Device" zur Verfügung stellt, mit deren Hilfe CTI-Services auch ohne Zuhilfenahme bzw. ohne Kenntnis des jeweiligen (dynamisch änderbaren) Proxy akzeptiert werden, auch wenn sich das Device nicht in der CTI-Domäne befindet. Der CTI-Server führt dann diesen CTI-Service an dem jeweils gültigen Proxy automatisch aus.

Die vorteilhafte Einführung einer Abstraktionsebene "Extra Domain Device" zur Ausführung von CTI-Services an Devices, die außerhalb der CTI-Domäne liegen, ermöglicht der High-Level-Applikation, auf die (dynamische) Proxy-Verwaltung zu verzichten und sich stattdessen auf das eigentliche Device zu konzentrieren. Für die CTI-Steuerung ist kein Wechsel der Logik (kein Paradigmenwechsel) mehr erforderlich. Das zu steuernde Device bleibt der High-Level-Applikation erhalten, und es findet kein Wechsel zum Proxy mehr statt. Das in der Beschreibung aufgeführte Beispiel CSTA Single Step Transfer lässt sich für weitere CSTA-Services (Call Control und andere) anwenden.

Im Folgenden wird die Erfindung anhand vorteilhafter Ausführungsbeispiele und mit Hilfe der Figuren näher beschrieben.

Dabei zeigt

Fig. 1 in schematischer Weise eine konventionelle Anordnung und eine CTI-Domäne bzw. -Domain, d. h. mit Trunks als Network Interfaces;

Fig. 2 in schematischer Weise eine Anordnung von Systemkomponenten zur Durchführung eines geplanten Anruf- bzw. Call-Ablaufprozesses nach einem bisher bekannten System (Callcenter-Betrieb der OpenScape Office);

Fig. 3 in schematischer Weise das System von Fig. 2 später im Prozess (Anruf auf Media-Server-Ansage geschaltet);

Fig. 4 in schematischer Weise Verbindungsänderungen für einen Single Step Transfer gemäß dem CSTA-Standard;

Fig. 5 in schematischer Weise eine Implementierung des Single Step Transfer gemäß Fig. 4 im System von Fig. 3;

Fig. 6 in schematischer Weise eine erste Anordnung von Systemkomponenten zur Durchführung eines Ausführungsbeispiels (Single Step Transfer) eines erfindungsgemäßen Verfahrens mittels eines Extra Domain Device;

Fig. 7 in schematischer Weise eine zweite Anordnung von Systemkomponenten zur Durchführung eines Ausführungsbeispiels (Single Step Transfer) eines erfindungsgemäßen Verfahrens mittels Middleware (CSP);

Fig. 8 in schematischer Weise eine dritte Anordnung von Systemkomponenten zur Durchführung eines Ausführungsbeispiels (CallMonitoring) eines erfindungsgemäßen Verfahrens mittels eines Extra Domain Device; und

Fig. 9 in schematischer Weise eine dritte Anordnung von Systemkomponenten zur Durchführung eines Ausführungsbeispiels (CallMonitoring) eines erfindungsgemäßen Verfahrens mittels Middleware (CSP).

Ausführungsformen der Erfindung werden beispielweise bezüglich bestimmter CTI-basierter Telekommunikationssysteme erklärt, nämlich OpenScape Voice bzw. OpenScape Office. Solche Systeme sind gemäß dem CSTA-Standard (Computer-Supported Telephony Applications) von ECMA (http://www.ecma-international.org/activities/Communications/TG11/cstaIII.htm) erstellt. Es ist aber klar, dass verschiedene Systeme als Basis für die Implementierung der Erfindung zur Verfügung stehen.

Sofern nicht anders angegeben, können einzelne Designmerkmale des Systems, Kombinationen von Komponenten, Verfahrensschritte oder andere hier offenbarte Techniken entsprechend den Ausführungsformen der vorliegenden Erfindung mit jedem oder allen anderen Designmerkmalen des Systems, Kombinationen von Komponenten, Verfahrensschritten oder anderen hier offenbarten Techniken kombiniert werden.

Fig. 2 zeigt in schematischer Weise eine Anordnung von Systemkomponenten zur Durchführung eines geplanten Call-Ablaufprozesses nach einem bisher bekannten System (Callcenter-Betrieb der OpenScape Office). Anruf A wird in OpenScape Office in die Warteschlange eingereiht bzw. gequeued.

Ferner wird die Lösung am Beispiel des OpenScape Contact Center V9.0 unter Anwendung des CSTA Service Single Step Transfer sowie des allgemeinen Call Monitoring aufgezeigt. Die Nutzung vergleichbarer Services ist denkbar.

A. Geplanter Call-Ablauf bei OpenScape Contact Center V9.0 mit OpenScape Office bzw. OpenScape Smart Office.

In OpenScape Office bzw. OpenScape Smart Office sind folgende Komponenten für den Callcenter-Betrieb mit dem OpenScape Contact Center V9.0 wesentlich beteiligt:

- Feature Processing (FP)
  Das FP - ein CTI-Server 20 - stellt das Wartefeld und die Callcenter-Verteilung (UCD) 22 sowie deren Agenten 24 zur Verfügung (integraler Bestandteil der Kommunikationsserver oder eigenständige Platt-form); mit anderen Worten ist das Feature Processing eine Telefonanlage, ein Teilsystem der OpenScape Office.
- Medienserver bzw. Media Server (MS)
  Medienserver 26 ist an CTI-Server 20 über SIP angebunden.
- OpenScape Contact Center (OSCC)
  Die Callcenter-Applikation 28 wird angebunden über CSTA und das MS API (Application Programming Interface) und verteilt Callcenter-Anrufe auf Ansagen, Agenten (z.B. drittes Endgerät 24) und das Wartefeld (= Queue).

Befindet sich ein Device in dieser OpenScape-Office-Domäne bzw. OpenScape-Office-Domain oder soll ein Device gesteuert werden, welches nicht direkt zu dieser Domain gehört, muss der Applikation 28 jeweils mitgeteilt werden, einen Trunk zu wählen, was für die Applikation 28 kein fester Anker, sondern ein variabler Anker ist.

Es ist bekannt, dass das OpenScape-Kontaktcenter (OSCC; Sendeapplikation) für Ansagen (z. B. "Hallo, herzlich willkommen, bitte drücken Sie "1"...") das Ansagehandling mit analogen Endgeräten implementiert. In einer anderen möglichen Ausführung wird ein Medienserver 26, der in der OpenScape Voice bereits verwendet wird, anstelle der kostspieligen analogen Endgeräte (MS) ins Gesamtsystem eingefügt. In Ausführungsformen der vorliegenden Erfindung wird Letzterer benutzt.

Der Anrufer A wird zunächst (in der Figur nicht gezeigt) am ersten Endgerät 36 (über PSTN und Leitung Trk 1) im FP (CTI-Server 20) der OpenScape Office bzw. OpenScape Smart Office im Wartefeld der UCD 22 auf der Verbindung C1 gequeued. Geht ein Anruf ein (FP), gelangt der Anrufer A (am ersten Endgerät 36) über einen Trunk Trk1 auf die Plattform, kommt auf ein Wartefeld UCD 22 und wartet dort auf die weitere Behandlung. Dies wird über CSTA dem Kontaktcenter (Applikation 28) gemeldet. Das Kontaktcenter (Applikation 28) nimmt den Anruf an, tätigt eine Ansage, und der Anruf wird daraufhin von der ersten Verbindung (Connection 1; C1) auf ein analoges Ansagegerät umgelegt. Bekannterweise handelt es sich um ein analoges Ansagegerät, vorteilhafterweise ist es ein Medienserver 26, und die Einschaltung erfolgt über SIP.

Wie in Fig. 1 gezeigt, sind Ansagen analoge Endgeräte, und das Ansagegerät befindet sich innerhalb der Switching Subdomain 10. Eine Applikation (z.B. OpenScape Voice (OSV) bzw. HiPath 8000 - Softswitch - von Unify GmbH & Co. KG) hat immer Zugriff darauf. Bei einer zukünftigen Implementierung, bei der der Medienserver 26 (Fig. 2) über SIP eingeschaltet wird, handelt es sich um eine Anschaltung über ein Netzwerk-Interface-Device (siehe rechte Seite in Fig. 1), das heißt, der Medienserver 26 liegt nicht in der CTI-Domäne 10', sondern außerhalb.

Wie in Fig. 2 gezeigt, ist die CTI-Domäne 10' das FP (CTI-Server 20), und der Medienserver 26 liegt aus CSTA-Sicht nicht in der Domäne 10'. Die OpenScape-Contact-Center-Applikation 28 hat eine Verbindung FP mit CSTA und eine andere Schnittstelle mit dem Medienserver 26.

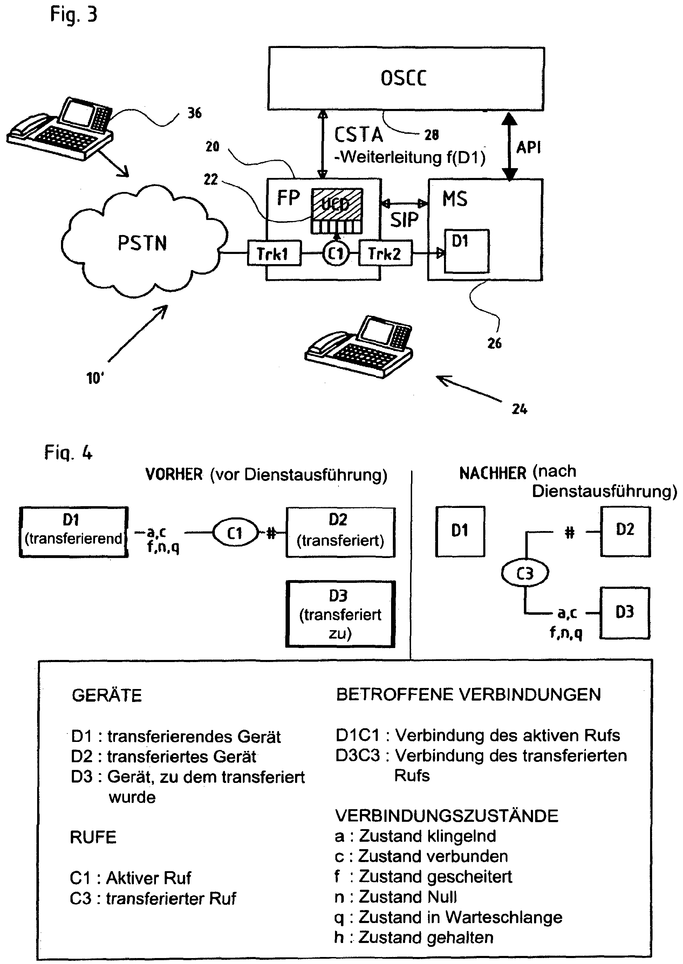

In Fig. 3 ist in schematischer Weise das System von Fig. 2 später im Prozess dargestellt. Ist kein Agent am dritten Endgerät 24 verfügbar oder soll eine Begrüßungsansage gespielt werden, so wird der Anrufer A am ersten Endgerät 36 durch die Callcenter-Applikation 28 (OSCC) aus der Queue heraus auf einen SIP-Trunk (Trk 2) geschaltet (im Falle von OpenScape Office und OpenScape Smart Office mittels CSTA Deflect Call).

Da der Medienserver 26 über natives SIP angeschaltet ist, kann die Identifizierung des Calls lediglich über die Rufnummer erfolgen. Hierzu wird von OSCC zum Weiterschalten eine Nachwahl mitgegeben.

> Call = Anwahl des Medienservers + individuelle Nachwahl => **D1**

Das Ziel ist eine Anordnung, bei der der Call (C1) zum Spielen einer Ansage das FP 20 verlässt und zum Medienserver 26 geschaltet wird, dann befindet sich ein Ansage-Gerät bzw. -Device (zweites Endgerät D1) im Medienserver 26. Dies wird im vorliegenden Fall über SIP erzielt. Da keine Zusatzinformation über SIP übertragen werden kann, wird das Ansagegerät D1 im Medienserver 26 durch eine Nachwahl identifiziert.

Beispiel: Wählt Anrufer A die "7007", würde der Anruf auf "7007" bei dem Medienserver 26 eingehen, und mit "510" würde das gewünschte Personenendgerät erreicht, das D1 entspricht. Darüber kann über SIP durch eine Nachwahl ein D1, D2 oder D3 adressiert werden. Der Call (C1) ist eine Anwahl des Medienservers 26 und eine individuelle Nachwahl, worüber ein D1 identifiziert ist.

Der CSTA-Kommando-Deflect-Call leitet den Call von der UCD 22 zu dem zweiten Endgerät D1 im Medienserver 26 weiter. Geschieht dies, ist UCD 22 nicht verbunden, und Anrufer A am ersten Endgerät 36 hat eine Verbindung von dem Trunk Trk1 zum Medienserver 26. Diese Information erhält die Applikation 28 dann auf CSTA-Trunk Trk1 und -Trunk Trk2.

Zur weiteren Behandlung des Calls (C1,...) müsste die Applikation 28 dann immer wieder prüfen, auf welchem Trunk (Trk1, Trk2,...) der Call läuft. Es ist nicht sicher, dass dies über Trunk Trk1 oder Trk2 geschieht, es könnte sich ebenso auch um Trunk 3 oder Trunk 4 handeln.

Der über CSTA angewendete Deflect Call ist nun eine Funktion von D1 - f(D1).

Der SIP-Trunk (Trk 2) spielt nun über den MS Ansagen aus dem Callcenter (OSCC) ein. Hierbei handelt es sich um ein voll qualifiziertes bidirektionales Gespräch.

Der Anruf von Anrufer A am dritten Endgerät 24 wird vom OSCC als f(D1) auf eine SIP-Ansage der Medienserver 26 geschaltet.

Wenn die Ansage abgespielt wurde, soll der Call C1 an einen Agenten am dritten Endgerät 24 weitergegeben werden. Dies erfolgt typischerweise mit einem Single Step Transfer.

B. Single Step Transfer

Fig. 4 zeigt in schematischer Weise Verbindungsänderungen für einen Single Step Transfer gemäß dem CSTA-Standard. Aus der Darstellung in Fig. 3 heraus ermöglicht der CSTA Service Single Step Transfer (SST) der Callcenter-Applikation 28 (OSCC), den Anruf C1 von dem SIP-Medienserver 26 auf ein beliebiges Ziel (z.B. Agent am dritten Endgerät 24) zu vermitteln.

Fig. 4 ist ein Diagramm aus ECMA-269: Gemäß ECMA-269 wäre dieser Service auf die CSTA Domain 10' bekannten Devices abzubilden (hier: Trk 2 => als Funktion f(Trk 2)).

Der Single Step Transfer Call Service (Einzelschrittübergangsanrufservice) überträgt eine vorhandene Verbindung C1 von einem Device D1 auf ein anderes Device D3. In Fig 4 ist gezeigt, wie Endgerät D1 mit einem Endgerät D2 kommuniziert und ein Kommando "single step transfer" von D1 zu Endgerät D3 absetzt, woraufhin dann D2 das D3 anruft.

Diese Übertragung wird in einem Schritt vorgenommen, das heißt das Device D2, welches die Übertragung vornimmt, muss die bestehende Verbindung C1 vor der Ausgabe des Single Step Transfer Call Service nicht in die Warteschleife leiten.

Die zu übertragende Verbindung C3 kann im alarmierenden, verbundenen, fehlgeschlagenen, gehaltenen oder eingereihten (Alerting, Connected, Failed, Held, or Queued) Zustand sein.

Beispiel:

| SIP-Trunk Trk 2 | FP | |
|---|---|---|
| **SingleStepTransferRequest**<br>• activeCall<br>• deviceToTransferTo | Trk 2 C1<br>Agent | **FP Proxy Trk 2 !** |
| **SingleStepTransferResult** | | |

Hierbei ist jedoch nicht sichergestellt, über welchen "Bekanntheitsgrad" der Proxy bei der Callcenter-Applikation 28 verfügt.

Aus Sicht der Applikation 28 findet ein Wechsel der Logik statt (Paradigmenwechsel):

| Der CTI-Service wechselt von f(D1) auf f(Trk 2). |
|---|

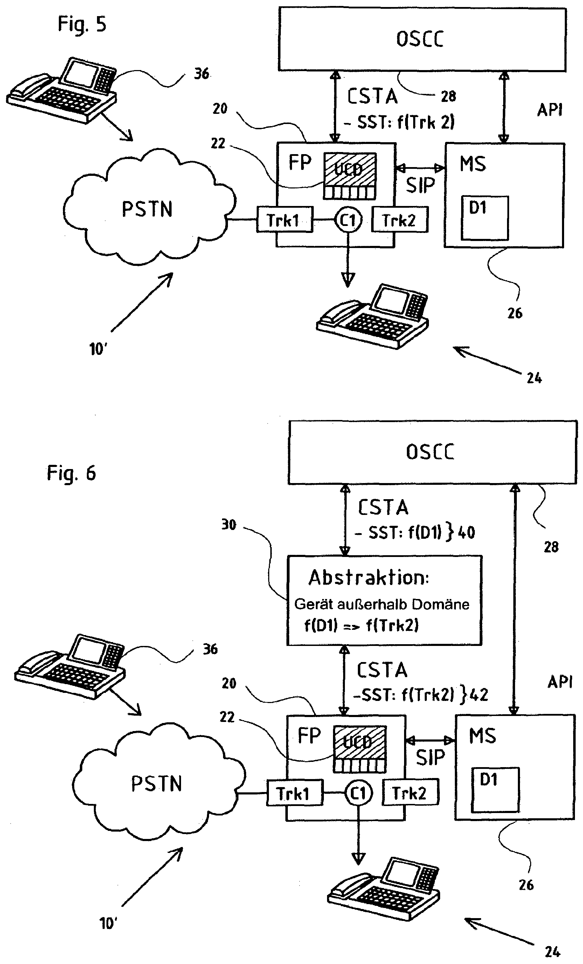

Fig. 5 zeigt in schematischer Weise eine Implementierung des Single Step Transfer gemäß Fig. 4 im System von Fig. 3. Hier wird Anruf A vom OSCC 28 als f(Trk 2) vom SIP-Medienserver 26 Proxy Trunk auf einen Agenten am dritten Endgerät 24 vermittelt (Voraussetzung ist Fig. 3).

Der in Fig. 5 gezeigte SIP-Trunk (Trk 2) stellt den Proxy zum Ansage-Device D1 des Medienservers 26 fest. Während der SIP-Trunk aus Sicht der Callcenter-Applikation 28 eine variable, ggf. unbekannte Größe ist, handelt es sich bei dem Ansage-Device (zweites Endgerät D1) des Medienservers 26 um eine konstante und aus Sicht der Callcenter-Applikation 28 um eine in jedem Fall bekannte Größe.

Das Kommando "deflectCall" müsste normalerweise lauten "Trunk Trk2 an den Agenten" (drittes Endgerät 24). Das Problem besteht darin, dass die OSCC-Applikation 28 eigentlich derart konfiguriert ist, nichts über diese Trunks zu wissen. Die OSCC-Applikation 28 hat eine Besonderheit: Sie ist herkömmlicherweise derart ausgestaltet, dass sie nur die folgenden Trunks erkennt: die echten Trunks des Central Office 18, die UCD 22 (Fig. 1) und die Agenten (drittes Endgerät 24). Das bedeutet, über den Call (Verbindung) C1 gibt es eigentlich keine Aussage. Der Call C1 ist jetzt auf Trunk Trk2, Applikation 28 kennt Trunk Trk2 jedoch nicht. Erfindungsgemäß ist diese Anforderung gelöst werden.

Aus Applikationssicht der Applikation 28 geschieht folgendes: Sie setzt einen Deflect Call auf das zweite Endgerät D1 und muss im weiteren Verlauf einen Trunk Trk2 steuern, den sie möglicherweise nicht kennt.

Der Single Step Transfer muss auf den Trunk Trk2 erfolgen. Damit der Call C1 vom Medienserver 26 von dem Endgerät D1 zum Agenten (drittes Endgerät 24) gelangt, muss auf CSTA (Applikation 28) ein Single-Step-Transfer-Kommando für den Trunk 2 erfolgen, und daraufhin geht der Call C1 zum Agenten (drittes Endgerät 24).

Das Problem besteht nun darin, dass der Trunk nicht bekannt ist und Applikation 28 nur Komponenten benutzen kann, die sie erkennt. Das einzige, das Applikation 28 im vorliegenden Fall kennt, ist das zweite Endgerät D1. D1 befindet sich jedoch nicht in der CTI-Domäne 10'. Die Erfindung löst das Problem, dass die Applikation 28 das Kommando auf D1 absetzen kann, obwohl D1 sich nicht in der Plattform (CTI-Domäne 10') befindet.

Fig. 6 zeigt in schematischer Weise eine erste Anordnung von Systemkomponenten zur Durchführung eines Ausführungsbeispiels eines erfindungsgemäßen Verfahrens mittels eines Extra Domain Device 30, und zwar für den Fall Single Step Transfer. Hier wird der Anruf von Anrufer A (erstes Endgerät 36) vom OSCC als f(D1) vom Ansage-Device SIP-Medienserver 26 auf einen Agenten (drittes Endgerät 24) vermittelt (Voraussetzung ist wieder Fig. 3). Die Ausführung erfolgt wie oben mit Bezug zu Fig. 1-5 beschrieben, mit Ausnahme der unten stehenden Ausführungen.

Das zweite Endgerät D1 befindet sich außerhalb der CTI-Domäne 10', daher ist erfindungsgemäß das extra Domain Device 30 vorgesehen. Extra Domain Device 30 ermöglicht dem System zunächst zu erkennen/prüfen, ob (i) ein Device D1 verbunden ist, (ii) es ein gültiges D1 ist, (iii) wo sich der Proxy befindet, (iv) die Zustände für den Proxy stimmen und (v) wie das Kommando auf den Proxy ausgeführt wird.

Im vorliegenden Fall war der Call (C1) an der UCD gequeued und die Applikation 28 bestimmte "Deflect Call zu D1". Die Applikation 28 gibt nun den Befehl, den Call zurückzugeben und nun "Single Step Transfer D1 auf den Agenten" durchzuführen. Die neue Schicht (Domain Device 30) ermittelt jetzt für den D1 den dynamischen internen Trunk, den die Applikation 28 noch nicht kennt. Die Applikation 28 kennt jetzt nur den UCD 22, das dritte Endgerät 24 des Agenten und den D1. Die Trunks übernimmt diese Zwischenschicht.

Die hier eingeführte Abstraktionsebene "Extra Domain Device" kann ihre Aufgabe auch im CTI-Server 20 (FP) direkt ausführen. Dieses macht vor allem innerhalb einer Vernetzung Sinn (z.B. via SIP-Q), bei der eine Callcenter-Applikation 28 mehrere Knoten gleichzeitig bedient.

Mit der Einführung einer Abstraktionsebene stellt der CTI-Server 20 (FP) für die CTI-Services eine Möglichkeit zur Verfügung, mit deren Hilfe CTI-Services auch ohne Zuhilfenahme bzw. ohne Kenntnis des jeweiligen (dynamisch änderbaren) Proxy akzeptiert werden, auch wenn sich das Device D1 nicht in der CTI-Domäne 10' befindet. Der CTI-Server 20 führt dann diesen CTI-Service an dem jeweils gültigen Proxy automatisch aus.

Damit ergibt sich aus Sicht der Callcenter-Applikation (OSCC) 28 nun folgender CTI-Aufruf auf ein in der CTI-Domäne 10' unbekanntes - extra Domain - Device (hier: D1 => als Funktion f(D1)):

| **SIP-Trunk Trk 2** | **FP** | |
|---|---|---|
| **SingleStepTransferRequest**<br>• activeCall<br>• deviceToTransferTo | D1 C1<br>Agent | **Media Server Device D1** |

(fortgesetzt)

| SIP-Trunk Trk 2 | FP | |
|---|---|---|
| SingleStepTransferResult | | |

Dieser Aufruf wird nun innerhalb der Abstraktionsebene "Extra Domain Device" 30 automatisch für den Proxy ausgeführt.

Aus Sicht der Applikation findet nun kein Wechsel der Logik statt (kein Paradigmenwechsel):

---

Der CTI-Service bleibt f(D1).

---

Somit wird mit Hilfe dieser Abstraktionsebene (Extra Domain Device 30) ein erster CTI-Service (SST:f(D1)) 40 über CSTA zwischen Extra Domain Device 30 und Applikation 28 signalisiert und ein zweiter CTI-Service (SST:f(Trk 2)) 42 über CSTA zwischen Extra Domain Device 30 und CTI-Server 20 signalisiert.

Die Aufgaben dieser Abstraktionsebene "Extra Domain Device" 30 sind:

- Auswertung D1
- Überprüfung der Existenz D1
- Ermittlung des (dynamischen) Proxy Trk 2
- Plausibilitätscheck
- Ausführung auf dem Proxy Trk 2.

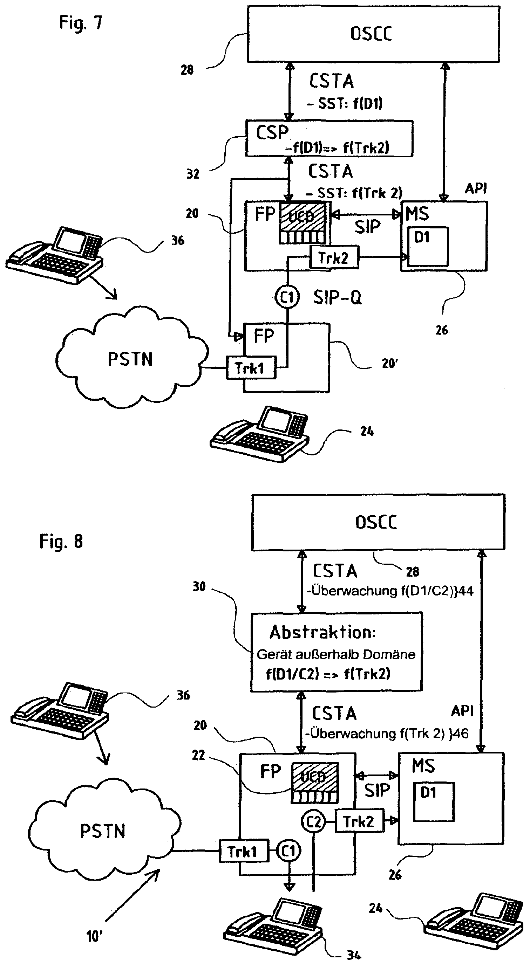

Fig. 7 zeigt in schematischer Weise eine zweite Anordnung von Systemkomponenten zur Durchführung eines Ausführungsbeispiels (Single Step Transfer) eines erfindungsgemäßen Verfahrens, d.h. Anwendung in der Vernetzung mit zusätzlicher Middleware 32 (CSP). In diesem Fall der OpenScape Office und OpenScape Smart Office handelt es sich um den CSP (CSTA Service Provider).

Gemäß bestimmter Ausführungsformen der Erfindung nimmt die Middleware eine Vernetzung mit mehreren Switches (Trk1 und Trk2) vor. Diese werden gemäß aktueller Technologie über die Middleware als nur ein Switch dargestellt. Die Switches (Trk1 und Trk2) wissen nicht, dass eine Vernetzung vorliegt und es sich um mehrere Knoten handelt. Die Erfindung ist somit auch in der Vernetzung, d.h. knotenübergreifend, anwendbar.

Ein Call kann über Gatewayknoten eingehen, die Applikation 28 kennt den Trunk, die UCD 22 kann sich in einem anderen Knoten befinden und der Medienserver 26 könnte noch an einen dritten Knoten angeschaltet sein (nicht gezeigt). Meistens funktioniert dies jedoch direkt, der eine oder andere Trunk ist mit dem Medienserver 26 verbunden, und es ist nicht erforderlich, dass der Medienserver 26 diesen Trunk kennt. Der Medienserver 26 muss nur wieder das D1 kennen und dann den Befehl "Single Step Transfer" von D1 auf den Agenten absetzen.

C. Call Monitoring

Fig. 8 zeigt in schematischer Weise eine dritte Anordnung von Systemkomponenten zur Durchführung eines Ausführungsbeispiels eines erfindungsgemäßen Verfahrens mittels eines Extra Domain Device 30, im Fall Call Monitoring.

Die Anwendung der Extra Domain Device 30 gilt nicht nur für eine spezielle Funktionalität/CTI-Service im CSTA, sondern ist allgemein gültig und kann auch z.B. für den Call-Monitoring-CTI-Service sowie für eingehende und ausgehende Anrufe angewendet werden.

Es erfolgt die Mitteilung, dass auf D1 ein Call eingegangen ist, und am Anfang ist der Monitorpunkt auf das zweite Endgerät D1 gesetzt.

Beim Call Monitoring kann temporär ein Monitorpunkt auf das außerhalb der CTI-Domäne 10' liegende Device gesetzt werden. Diese Art der Anwendung ermöglicht das Erfassen von Änderungen im Gespräch, zum Beispiel durch einen Transfer nach Rückfrage in das Callcenter (siehe Kapitel B).

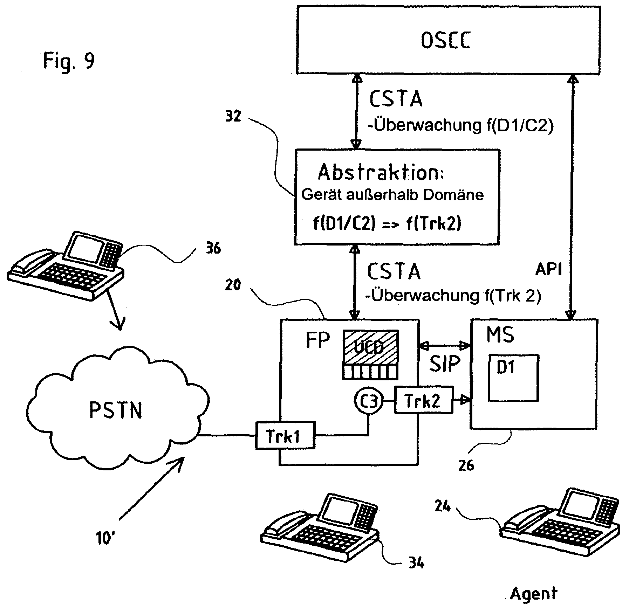

In Fig. 8 befindet sich ein Teilnehmer am vierten Endgerät 34 (z.B. Vermittlungsplatz) in einer Rückfrage zum Callcenter auf der Verbindung C2. Der Teilnehmer hört eine Ansage (s. Fig. 3) von Device D1 des Medienservers 26. Der ursprüngliche Anruf wird auf der Verbindung C1 gehalten. Wird diese Rückfrage in das Callcenter übergeben, so wechselt die Verbindung typischerweise ihren Wert, es entsteht die Verbindung C3 (siehe Fig. 9).

Fig. 9 zeigt in schematischer Weise eine dritte Anordnung von Systemkomponenten zur Durchführung eines Ausführungsbeispiels eines erfindungsgemäßen Verfahrens mittels Middleware (CSP), im Fall CallMonitoring. Hier wird eine Vermittlung einer Rückfrage in das Callcenter (Änderung der Verbindung) ausgeführt.

Der detaillierte Ablauf ist in Tabelle 2 dargestellt.

| Service and events | Device Trk 2 | Device Dn | Comments |
|---|---|---|---|
| ... | | | *The call has been diverted from UCD device D3 to OMS.* |
| **DeliveredEvent**<br>• connection<br>• alertingDevice<br>• callingDevice<br>• calledDevice<br>• lastRedirectionDevice<br>• localConnectionInfo<br>• cause | Trk2 C2<br>Dn<br>Teilnehmer<br>UCD<br>UCD<br>Connected<br>newCall | | *The call is alerting OMS device Dn.* |
| **MonitorStartRequest**<br>• monitorObject | | Dn C2 | *OSCC starts monitoring OMS device Dn.* |
| **MonitorStartResult**<br>• crossRefernceID | | | *Monitor on Device Dn as a model of Trk 2 (optional).* |
| **EstablishedEvent**<br>• establishedConnection<br>• answeringDevice<br>• callingDevice<br>• calledDevice<br>• lastRedirectionDevice<br>• localConnectionInfo<br>• cause | Trk2 C2<br>Dn<br>Teilnehmer<br>UCD<br>UCD<br>Connected<br>newCall | Dn C2<br>Dn<br>Teilnehmer<br>UCD<br>UCD<br>Connected<br>newCall | *OMS answers the call and plays announcement.* |

**Tabelle 2:** CSTA-Events für das "Extra Domain Device"

| Services and events | Device.Trk 2 | Device Dn | Comments |
|---|---|---|---|
| **TransferredEvent**<br>primaryOldCall<br>• transferringDevice<br>• transferredToDevice<br>• transferredConnection<br><br><br>• transferredConnection<br><br><br>• localConnectionInfo<br>• cause | Trk2 C2<br>Teilnehmer<br>Dn<br>Trk 1 C3<br>Trk 1 C1<br>Anrufer A<br>Trk 2 C3<br>Trk 2 C2<br>Dn<br>Connected<br>transfer | Dn C2<br>Teilnehmer<br>Dn<br>Trk 1 C3<br>Trk 1 C1<br>Anrufer A<br>Dn C3<br>Dn C2<br><br>Connected<br>transfer | *Call is transferred.* |
| ... | | | |

Am temporären Monitorpunkt für das "Extra Domain Device" 32 (Dn) kann zusätzlich eine Umsetzung vom Proxy Trunk Trk 2 auf das aus der Sicht der CTI-Domäne 10' externe Device Dn erfolgen.

Durch die vorteilhafte Einführung einer Abstraktionsebene "Extra Domain Device" 30, 32 zur Ausführung von CTI-Services an Devices, die außerhalb der CTI-Domäne 10' fliegen, wird es High-Level-Applikationen 28 ermöglicht, auf die (dynamische) Proxy-Verwaltung zu verzichten und sich stattdessen auf das eigentliche Device zu konzentrieren.

Somit wird mit Hilfe dieser Abstraktionsebene (Extra Domain Device 30) ein erster CTI-Service (MONITORING:f(D1, C2)) 44 über CSTA zwischen "Extra Domain Device" 30 und Applikation 28 signalisiert, und ein zweiter CTI-Service (SST:f(Trk 2), MONITORING:f(Trk 2)) 46 über CSTA zwischen "Extra Domain Device" 30 und Applikation 28 und CTI-Server 20 signalisiert.

Für die CTI-Steuerung ist kein Wechsel der Logik mehr erforderlich (kein Paradigmenwechsel). Das zu steuernde Device bleibt der High-Level-Applikation 28 erhalten, und es findet kein Wechsel zum Proxy mehr statt.

Die hier aufgeführten Beispiele CSTA Single Step Transfer und Call Monitoring lassen sich auf weitere CSTA-Services (Call Control und andere) anwenden.

Das Extra Domain Device 30 kann dabei ein extra Server oder Middleware oder Software sein, oder auf der Plattform selber implementiert sein.

Single Step Transfer und Call Monitoring sind nur Beispiele für verschiedene Funktionalitäten, die durch die Erfindung vereinfacht werden können.

Ein Vorteil besteht darin, dass sich die High-Level-Applikation 28 nicht damit befassen muss, wo die Grenzen der CTI-Domäne 10' sind. Sie kann in Anspruch nehmen, dass auch andere Devices von der Applikation 28 kontrollierbar sind, obwohl sie außerhalb der CTI-Domäne 10' liegen, ohne sich damit befassen zu müssen, welche zusätzlichen Resourcen intern in dem Call Processing in dieser Plattform genutzt werden, wie man diese adressiert usw. Dies wird der Applikation 28 abgenommen, wodurch die Funktionsweise vereinfacht wird.

Zusätzlich zu den oben genannten zwei Beispielen (Call Monitoring und Single Step Transfer), gibt es noch andere Funktionalitäten, in denen diese Abstraktionsebene vorteilhaft wäre, z.B. Device Monitoring der CSTA.

Es ist festzuhalten, dass die unter Bezug auf die dargestellten Ausführungsformen beschriebenen Merkmale der Erfindung, wie beispielsweise CTI-Server, Medienserver, Steuerprogramm (Applikation), Datenstrukturen, Extra Domain Device (die Art und Ausgestaltung der verwendeten Parameter, Steuerbefehle, Protokolle und Hardware-Komponenten, die Anordnung der einzelnen Komponenten relativ zueinander oder die Abfolge der jeweiligen Verfahrensschritte) auch bei anderen Ausführungsformen oder Varianten hiervon vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

Abkürzungen

| | |
|---|---|
| ACD | Automatic Call Distribution |
| API | Application Programming Interface |
| CSTA | Computer Supported Telecommunications Applications |
| C1, C2, C3 | Verbindung (Connection) |
| D1, D2, D3 | (Teilnehmer) Device |
| ECMA-269 | Standard ECMA-269. Services for Computer Supported Telecommunications Applications (CSTA) Phase III. 9th edition (December 2011). |
| FP | Feature Processing |
| f(...) | Funktion von ... |
| MS | Medienserver |
| OSCC | OpenScape Contact Center |
| PSTN | Public Switched Telephone Network |
| SIP | Session Initiation Protocol |
| SIP-Q | Vernetzungsprotokoll CorNet-NQ über SIP getunnelt |
| SST | CSTA Service Single Step Transfer |
| Trk1, Trk2 | (Netzwerk) Trunk |
| UCD | Universal Call Distribution (ACD-Lösung der OpenScape Office und OpenScape Smart Office) |

Liste der Bezugszeichen mit features

10, 10' CTI-Domäne
12 Network Interface Device
14 Branch/PBX
16 Device/Gerät

18 Central Office
20 CTI- Server
22 Callcenter-Verteilung/UCD
24 drittes Kommunikationsendgerät/Agent
26 Medienserver
28 Steuerprogramm
30 Zwischenfunktionseinheit/Abstraktionsebene
32 Zwischenfunktionseinheit
36 erstes Kommunikationsendgerät/Anrufer
40 erster CTI-Service
42 zweiter CTI-Service
44 erster CTI-Service
46 zweiter CTI-Service

**Patentansprüche**

1. Verfahren zum Aufbau einer von einem Steuerprogramm (28) gesteuerten Telekommunikationsverbindung (C1, C2, C3) mit einem zweiten Kommunikationsendgerät (D1), wobei ein erstes Kommunikationsendgerät (36) in einer einem CTI-Server (20) zugeordneten CTI-Domäne von dem CTI-Server (20) mit einem CTI-Service versorgt wird, wobei
das zweite Kommunikationsendgerät (D1) außerhalb der CTI-Domäne angeordnet und über einen innerhalb der CTI-Domäne befindlichen Proxy (Trk2) an den CTI-Server (20) angebunden ist,
**dadurch gekennzeichnet, dass**
das Steuerprogramm (28) über eine Zwischenfunktionseinheit (30, 32) mit dem CTI-Server (20) verbunden ist,
die Zwischenfunktionseinheit (30, 32) dem Steuerprogramm (28) das zweite Kommunikationsendgerät (D1) als in der aufgebauten Telekommunikationsverbindung (C1, C2, C3) angebundenes Kommunikationsendgerät anstelle des Proxy (Trk2) signalisiert, und
die Zwischenfunktionseinheit (30, 32) den CTI-Server (20) anweist, den CTI-Service nach Maßgabe des Steuerprogramms (28) an dem Proxy (Trk2) auszuführen.

2. Verfahren nach Anspruch 1, bei dem,
falls das zweite Kommunikationsendgerät (D1) nicht an das erste Kommunikationsendgerät (36) angebunden ist, die Zwischenfunktionseinheit (30, 32) dem Steuerprogramm (28) ein virtuelles Kommunikationsendgerät innerhalb der CTI-Domäne als in der aufgebauten Telekommunikationsverbindung (C1, C2, C3) angebundenes Kommunikationsendgerät anstelle des Proxy (Trk2) signalisiert.

3. Verfahren nach Anspruch 1 oder 2, **dadurch gekennzeichnet, dass** eine erste Telekommunikationsverbindung (C1) zwischen dem ersten Kommunikationsendgerät (36) und dem zweiten Kommunikationsendgerät (D1) erstellt wird, wobei die erste Telekommunikationsverbindung (C1) dem Steuerprogramm (28) als erster CTI-Service (40; 44) signalisiert wird.

4. Verfahren nach Anspruch 3, **dadurch gekennzeichnet, dass** das Verfahren weiterhin umfasst:

eine zweite Telekommunikationsverbindung (C2) anstelle der ersten Telekommunikationsverbindung (C1) festzulegen, wobei die zweite Telekommunikationsverbindung (C2) zwischen dem ersten Kommunikationsendgerät (36) und einem dritten Kommunikationsendgerät (24) angeordnet ist.

5. Verfahren nach Anspruch 4, **dadurch gekennzeichnet, dass** die zweite Telekommunikationsverbindung (C2) einem zweiten CTI-Service (42; 46) entspricht, wobei der in dem Steuerprogramm (28) erscheinende CTI-Service der erste CTI-Service (40; 44) ist.

6. Verfahren nach einem der vorhergehenden Ansprüche, **dadurch gekennzeichnet, dass** eine erste und/oder zweite Telekommunikationsverbindung (C1; C2) je einem Proxy (Trk1, Trk2) entsprechen, und der CTI-Server (20) dafür ausgelegt ist, ohne die Kenntnis des jeweiligen dynamisch änderbaren Proxy (Trk1, Trk2) zu nutzen, den CTI-Service automatisch mit dem jeweils gültigen Proxy (Trk1, Trk2) auszuführen, wobei vorzugsweise die Zwischenfunktionseinheit (30, 32) ausgebildet ist, Daten über eine Abstraktionsebene (30) bezüglich des zumindest einen CTI-Servers (20) über einen Proxy (Trk1, Trk2) zum Steuerprogramm (28) zu übermitteln.

**7.** Verfahren nach einem der Ansprüche 4 bis 6, **dadurch gekennzeichnet, dass** ein Wechsel von der ersten Telekommunikationsverbindung (C1) zur zweiten Telekommunikationsverbindung (C2) entweder (i) einem Single Step Transfer oder (ii) einem Wechsel von CallMonitoring zur Kommunikationsendgeräteverbindung entspricht, wobei vorzugsweise der CTI-Server (20) eine CTI-Domäne (10, 10') definiert und sich wenigstens eines der Kommunikationsendgeräte (D1) außerhalb der CTI-Domäne (10, 10') befindet.

**8.** Computerprogrammprodukt für den Aufbau einer Telekommunikationsverbindung zum Durchführen eines Verfahrens gemäß einem der vorhergehenden Ansprüche.

**9.** Maschinenlesbarer Datenträger mit einem auf dem Datenträger gespeicherten Computerprogrammprodukt gemäß Anspruch 8.

**10.** Anordnung zum Aufbau einer von einem Steuerprogramm (28) gesteuerten Telekommunikationsverbindung, umfassend:

    einen CTI-Server (20),
    ein erstes Kommunikationsendgerät (36), welches sich in der CTI-Domäne (10, 10') des CTI-Servers (20) befindet,
    ein zweites Kommunikationsendgerät (D1), welches sich außerhalb der CTI-Domäne (10, 10') des CTI-Servers (20) befindet,
    **gekennzeichnet durch** eine Steuereinrichtung zum Ausführen des Verfahrens gemäß einem der Ansprüche 1 bis 7.

**Claims**

**1.** Method for establishing a telecommunication link (C1, C2, C3) controlled by a control program (28), with a second communication terminal (D1), wherein a first communication terminal (36) in a CTI domain associated with a CTI server (20) is supplied with a CTI service by the CTI server (20), wherein
the second communication terminal (D1) is arranged outside of the CTI domain and is connected to the CTI server (20) via a proxy (Trk2) located within the CTI domain,
**characterized in that**
the control program (28) is connected to the CTI server (20) via an intermediate functional unit (30, 32),
the intermediate functional unit (30, 32) signals to the control program (28) the second communication device (D1) as communication terminal connected to the established telecommunication link (C1, C2, C3) instead of the proxy (Trk2), and
the intermediate functional unit (30, 32) instructs the CTI server (20) to carry out the CTI service in accordance with the control program (28) on the proxy (Trk2).

**2.** Method according to Claim 1, in which,
if the second communication terminal (D1) is not connected to the first communication terminal (36),
the intermediate functional unit (30, 32) signals to the control program (28) a virtual communication terminal within the CTI domain as communication terminal connected in the established telecommunication link (C1, C2, C3) instead of the proxy (Trk2).

**3.** Method according to Claim 1 or 2, **characterized in that** a first telecommunication link (C1) is established between the first communication terminal (36) and the second communication terminal (D1), wherein the first telecommunication link (C1) is signaled to the control program (28) as first CTI service (40; 44).

**4.** Method according to Claim 3, **characterized in that** the method furthermore comprises:

    establishing a second telecommunication link (C2) instead of the first telecommunication link (C1), wherein the second telecommunication link (C2) is arranged between the first communication terminal (36) and a third communication terminal (24).

**5.** Method according to Claim 4, **characterized in that** the second telecommunication link (C2) corresponds to a second CTI service (42; 46), wherein the CTI service appearing in the control program (28) is the first CTI service (40; 44).

6. Method according to any one of the preceding claims, **characterized in that** a first and/or second telecommunication link (C1; C2) in each case corresponds to a proxy (Trk1, Trk2), and the CTI server (20) is designed to perform the CTI service automatically with the respective valid proxy (Trk1, Trk2) without using the knowledge of the respective dynamically modifiable proxy (Trk1, Trk2), wherein the intermediate functional unit (30, 32) is preferably designed to transmit data, via an abstraction level (30) with regard to the at least one CTI server (20), via a proxy (Trk1, Trk2) to the control program (28).

7. Method according to any one of Claims 4 to 6, **characterized in that** a switch from the first telecommunication link (C1) to the second telecommunication link (C2) corresponds either (i) to a Single Step Transfer or (ii) to a switch from Call Monitoring to the communication terminal link, wherein the CTI server (20) preferably defines a CTI domain (10, 10') and at least one of the communication terminals (D1) is located outside of the CTI domain (10, 10').

8. Computer program product for establishing a telecommunication link for carrying out a method according to any one of the preceding claims.

9. Machine readable data support with a computer program product according to Claim 8 stored on the data support.

10. Arrangement for establishing a telecommunication link controlled by a control program (28), comprising:

   a CTI server (20),
   a first communication terminal (36) which is located in the CTI domain (10, 10') of the CTI server (20),
   a second communication terminal (D1) which is located outside of the CTI domain (10, 10') of the CTI server (20),
   **characterized by** a control device for carrying out the method according to any one of Claims 1 to 7.

**Revendications**

1. Procédé servant à établir une liaison de télécommunication (C1, C2, C3) commandée par un programme de commande (28) avec un deuxième terminal de communication (D1), sachant que le serveur CTI (20) fournit à un premier terminal de communication (36) un service CTI dans un domaine CTI attribué à un serveur CTI (20), sachant que le deuxième terminal de communication (D1) est disposé à l'extérieur du domaine CTI et est connecté au serveur CTI (20) par l'intermédiaire d'un proxy (Trk2) se trouvant à l'intérieur du domaine CTI,
   **caractérisé en ce que**
   le programme de commande (28) est relié par l'intermédiaire d'une unité de fonction intermédiaire (30, 32) au serveur CTI (20),
   **en ce que** l'unité de fonction intermédiaire (30, 32) signale au programme de commande (28) le deuxième terminal de communication (D1) comme étant un terminal de communication connecté dans la liaison de télécommunication (C1, C2, C3) établie en lieu et place du proxy (Trk2), et
   **en ce que** l'unité de fonction intermédiaire (30, 32) ordonne au serveur CTI (20) d'exécuter le service CTI conformément au programme de commande (28) sur le proxy (Trk2).

2. Procédé selon la revendication 1, dans le cadre duquel
   si le deuxième terminal de communication (D1) n'est pas connecté au premier terminal de communication (36), l'unité de fonction intermédiaire (30, 32) signale au programme de commande (28) un terminal de communication virtuel à l'intérieur du domaine CTI comme étant tant un terminal de communication connecté dans la liaison de télécommunication (C1, C2, C3) établie en lieu et place du proxy (Trk2).

3. Procédé selon la revendication 1 ou 2, **caractérisé en ce qu'**une première liaison de télécommunication (C1) est créée entre le premier terminal de communication (36) et le deuxième terminal de communication (D1), sachant que la première liaison de télécommunication (C1) est signalée au programme de commande (28) comme étant un premier service CTI (40 ; 44).

4. Procédé selon la revendication 3, **caractérisé en ce que** le procédé comprend en outre les étapes suivantes consistant :

   à déterminer une deuxième liaison de télécommunication (C2) en lieu et place de la première liaison de télécommunication (C1), sachant que la deuxième liaison de télécommunication (C2) est disposée entre le premier terminal de communication (36) et un troisième terminal de communication (24).

**5.** Procédé selon la revendication 4, **caractérisé en ce que** la deuxième liaison de télécommunication (C2) correspond à un deuxième service CTI (42 ; 46), sachant que le service CTI apparaissant dans le programme de commande (28) est le premier service CTI (40 ; 44).

**6.** Procédé selon l'une quelconque des revendications précédentes, **caractérisé en ce qu'**une première liaison de télécommunication et/ou une deuxième liaison de télécommunication (C1 ; C2) correspondent respectivement à un proxy (Trk1, Trk2), et **en ce que** le serveur CTI (20) est mis au point sans utiliser la connaissance du proxy (Trk1, Trk2) respectif à changement dynamique, pour exécuter le service CTI automatiquement avec le proxy (Trk1, Trk2) respectivement applicable, sachant que de préférence l'unité de fonction intermédiaire (30, 32) est réalisée pour transmettre des données par l'intermédiaire d'un plan d'abstraction (30) par rapport au serveur CTI (20) au moins au nombre de un, en passant par un proxy (Trk1, Trk2), au programme de commande (28).

**7.** Procédé selon l'une quelconque des revendications 4 à 6, **caractérisé en ce qu'**un changement de la première liaison de télécommunication (C1) à la deuxième liaison de télécommunication (C2) correspond soit à (i) un transfert à étape unique soit à (ii) un changement du call monitoring à la liaison de terminal de communication, sachant que de préférence le serveur CTI (20) définit un domaine CTI (10, 10') et qu'au moins un des terminaux de communication (D1) se trouve à l'extérieur du domaine CTI (10, 10').

**8.** Produit de programme informatique pour l'établissement d'une liaison de télécommunication servant à la mise en oeuvre d'un procédé selon l'une quelconque des revendications précédentes.

**9.** Support de données lisible à la machine comprenant un produit de programme informatique selon la revendication 8 enregistré sur le support de données.

**10.** Ensemble servant à établir une liaison de télécommunication commandée par un programme de commande (28), comprenant :

un serveur CTI (20),
un premier terminal de communication (36), qui se trouve dans le domaine CTI (10, 10') du serveur CTI (20),
un deuxième terminal de communication (D1), qui se trouve à l'extérieur du domaine CTI (10, 10') du serveur CTI (20),
**caractérisé par** un dispositif de commande servant à exécuter le procédé selon l'une quelconque des revendications 1 à 7.

Fig. 1

Fig. 2

## Fig. 3

## Fig. 4

**VORHER (vor Dienstausführung)** | **NACHHER (nach Dienstausführung)**

| GERÄTE | BETROFFENE VERBINDUNGEN |
|---|---|
| D1 : transferierendes Gerät | D1C1 : Verbindung des aktiven Rufs |
| D2 : transferiertes Gerät | D3C3 : Verbindung des transferierten |
| D3 : Gerät, zu dem transferiert wurde | Rufs |

VERBINDUNGSZUSTÄNDE

RUFE

C1 : Aktiver Ruf
C3 : transferierter Ruf

a : Zustand klingelnd
c : Zustand verbunden
f : Zustand gescheitert
n : Zustand Null
q : Zustand in Warteschlange
h : Zustand gehalten

Fig. 5

Fig. 6

Fig. 7

Fig. 8

Fig. 9

OSCC

CSTA
-Überwachung f(D1/C2)

32

Abstraktion:
Gerät außerhalb Domäne
f(D1/C2) => f(Trk2)

36

CSTA
-Überwachung f(Trk 2)

20

API

FP   UCD

SIP

MS

D1

PSTN

C3   Trk2

Trk1

26

10'

34

24

Agent

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9851092 A1
- DE 10159636 B4
- DE 102006001226 A1

**In der Beschreibung aufgeführte Nicht-Patentliteratur**

- Standard ECMA-269. Services for Computer Supported Telecommunications Applications (CSTA) Phase III. Dezember 2011